# EUROPEAN PATENT APPLICATION

(11) **EP 4 583 034 A1**
(43) Date of publication of application: **09.07.2025**
(21) Application number: 23859737.1
(22) Date of filing: 22.05.2023
(51) Int. Cl.: G06Q 50/08, E04G 21/00, G05D 1/20

(54) **MANAGEMENT SUPPORT SYSTEM FOR BUILDING OR CIVIL ENGINEERING STRUCTURE**

(30) Priority: 31.08.2022 JP 2022137780
(71) Applicant: IXS Co., Ltd., Kawasaki-shi, Kanagawa, 212-0032 (JP)
(72) Inventor: YAMASAKI, Fuminori, Kawasaki-shi, Kanagawa 212-0032 (JP)
(74) Representative: TBK
(86) International application number: PCT/JP2023/018951
(87) International publication number: WO 2024/047967

(57) **Abstract**

Provided is a management assistance system capable of saving man-hour and improving safety in construction or civil engineering works by the worker. The system contains a database that stores attribute information for BIM or CIM; a plurality of target markers attached to specific structures;
a mobile robot structured to patrol a yard of the building or the civil engineering structure, and to scan the periphery with a scanner, thereby acquiring three-dimensional point cloud data; and a computer apparatus structured to recognize position and posture of the specific structures having the target markers detected by analyzing the point cloud data, and, if the identification information of the target markers acquired by the computer apparatus is corresponded to an existing object stored in the database, the information regarding the existing object is updated with reference to the position and the posture of the specific structure recognized by the computer apparatus.

## Description

### TECHNICAL FIELD

This invention relates to a management assistance system for a building or a civil engineering structure.

### BACKGROUND ART

The Ministry of Land, Infrastructure, Transport and Tourism has recently issued the BIM and CIM guidelines, and this has promoted introduction of BIM/CIM into business in the fields of construction and civil engineering.

BIM is an abbreviation for Building Information Modeling, by which a three-dimensional model of a building created on a computer will have various attributes added thereto. Meanwhile, CIM is an abbreviation for Construction Information Modeling, which is an idea of BIM applied to the field of civil engineering.

Introduction of BIM/CIM, from the planning, survey and design phases will make it easier to share information in the subsequent phases including construction, maintenance and management, and will streamline and upgrade a series of operations and businesses.

The introduction of BIM/CIM is also expected to yield secondary effect of improving the life of the people through better implementation, maintenance and management of infrastructure, and of enhancing motivation of workers engaged in the fields of construction and civil engineering.

Considering such situation, a series of various construction management systems on the premise of introduction of BIM/CIM have been proposed (see Patent Literature 1, for example).

A system according to Patent Literature 1 is structured to photograph the individual members that constitute BIM with a camera, and to link the photographed parts and the acquired image.

The system can improve traceability of an object to be constructed on the member basis, and can improve convenience of construction management.

### CITATION LIST

### PATENT LITERATURE

[Patent Literature 1] JP 2020-149546 A

### SUMMARY OF THE INVENTION

### TECHNICAL PROBLEM

In the system according to Patent Literature 1, the photographing work mainly relies upon the worker (human), thus leaving room for improvement in terms of saving of man-hour and improvement of safety of the worker.

This invention was arrived at in consideration of the aforementioned problem, and is to provide a management assistance system capable of saving man-hour and improving safety in construction or civil engineering works by the worker.

### SOLUTION TO PROBLEM

According to this invention, there is provided a management assistance system for a building or a civil engineering structure, the system including: a database that stores attribute information for building information modeling (BIM) enabling three-dimensional expression of a building, or construction information modeling (CIM) enabling three-dimensional expression of a civil engineering structure, by combining objects that correspond to a plurality of structures that constitute the building or the civil engineering structure; a plurality of target markers attached to specific structures which are parts of the plurality of structures, each having depicted thereon an identification pattern identifiable from each other; a mobile robot having a scanner mounted thereon, and being structured to patrol a yard of the building or the civil engineering structure, and to scan the periphery with the scanner, thereby acquiring three-dimensional point cloud data; and a computer apparatus structured to analyze the point cloud data acquired during patrol by the mobile robot to detect the target markers, and to recognize position and posture of the specific structures having the detected target markers attached thereon, the computer apparatus being able to acquire identification information of the target markers, from the identification pattern of the detected target markers, and, if the identification information of the target markers acquired by the computer apparatus is corresponded to an existing object stored in the database, the information regarding the existing object is updated with reference to the position and the posture of the specific structure recognized by the computer apparatus.

According to this invention, the mobile robot scans a specific structure to be managed to acquire the point cloud data, and the computer apparatus analyzes the point cloud data to identify position and posture of the thus identified specific structure, which are reflected on attribute information for BIM or CIM in a database. The user is therefore no longer necessary to come close to the specific structure to be managed, thus successfully reducing the man-hour. The worker is thus kept safe, even if the specific structure resides in a high risk location such as high place.

### ADVANTAGEOUS EFFECTS OF INVENTION

This invention can provide a management assistance system capable of saving man-hour and improving safety of the worker in construction or civil engineering works.

### BRIEF DESCRIPTION OF DRAWINGS

[FIG. 1] FIG. 1 is a configuration chart of a management assistance system according to an embodiment of this invention.
[FIG. 2] FIG. 2 is a perspective view of a mobile robot.
[FIG. 3] FIG. 3 is a drawing illustrating a prior map three-dimensionally displayed on a display screen of a communication terminal.
[FIG. 4] FIG. 4 is a drawing illustrating a prior map two-dimensionally displayed on the display screen of the communication terminal.
[FIG. 5] FIG. 5 is a drawing illustrating a target marker according to this invention.
[FIG. 6] FIG. 6 is a drawing illustrating an error map created from a measured result of the target marker illustrated in FIG. 5.
[FIG. 7] FIG. 7 is a schematic drawing illustrating point cloud data acquired by a mobile robot.
[FIG. 8] FIG. 8 is a schematic drawing illustrating point cloud data acquired by the mobile robot.
[FIG. 9] FIG. 9 is a schematic drawing illustrating point cloud data acquired by the mobile robot.

### DESCRIPTION OF EMBODIMENTS

Embodiments of this invention will be explained below referring to the attached drawings. Note that all similar constituents in all drawings will have the same reference signs to properly skip the explanation as appropriate.

### <System Configuration of Management Assistance System 100>

First, a system configuration of a management assistance system 100 will be explained.

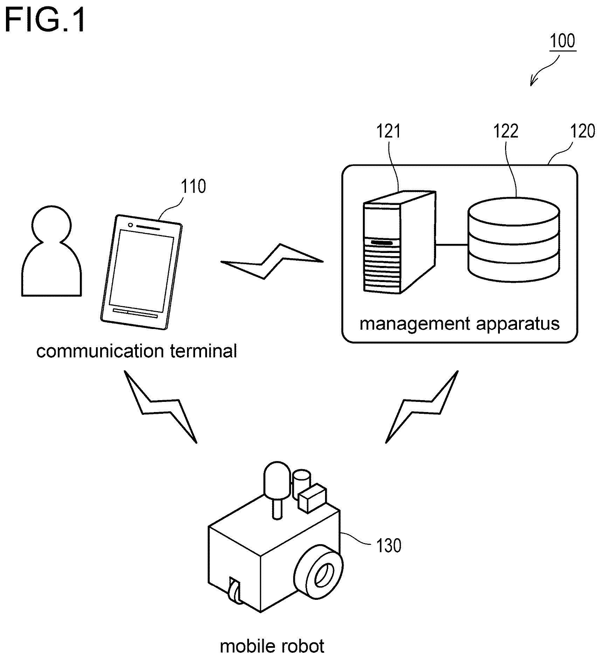

FIG. 1 is a diagram illustrating the management assistance system 100 in an embodiment of this invention.

As illustrated in FIG. 1, the management assistance system 100 has a communication terminal 110, a management apparatus 120, and a mobile robot 130.

The communication terminal 110, the management apparatus 120, and the mobile robot 130 are structured to be mutually communicatable. "Mutually communicatable" herein means that the communication terminal 110, the management apparatus 120, and the mobile robot 130 are directly communicatable, or they are indirectly communicatable via a computer line such as the Internet.

Accordingly, this enables the communication terminal 110 to transmit a control command to the mobile robot 130, enables the communication terminal 110 to read data file stored in the communication terminal 110, enables transmission of data acquired by the mobile robot 130 to the management apparatus 120, and enables transmission of the data processed by the management apparatus 120 to the mobile robot 130.

The management apparatus 120 contains a computer apparatus 121 and a database 122.

The computer apparatus 121 can directly or indirectly communicate with the communication terminal 110 and the mobile robot 130, stores the received individual data into the database 122, and processes the individual data stored in the database 122.

The database 122 stores attribute information for building information modeling (BIM) or construction information modeling (CIM).

In the explanation of this embodiment, BIM means a three-dimensional model that three-dimensionally expresses a building, by combining a plurality of objects corresponded to the individual structures arranged in the building. Meanwhile, CIM means a three-dimensional model that three-dimensionally expresses a civil engineering structure, by combining a plurality of objects corresponded to the individual structures arranged in the civil engineering structure.

The attribute information for BIM or CIM stored in the database 122 means a data file compatible to a plurality of types of software assistanceed by BIM or CIM (simply referred to as BIM software, hereinafter), and typically means a data file in the industry foundation classes (IFC) format.

Note that the database 122 may typically store attribute information for three-dimensional CAD data, or point cloud data acquired by the laser scanner 132, besides the data file in the IFC format.

The mobile robot 130 is a self-propelled robot that runs through the yard of the building or civil engineering structure. "Self-propelled" herein is synonymous to "autonomous", allowing travel based on autonomous decision of a travel route.

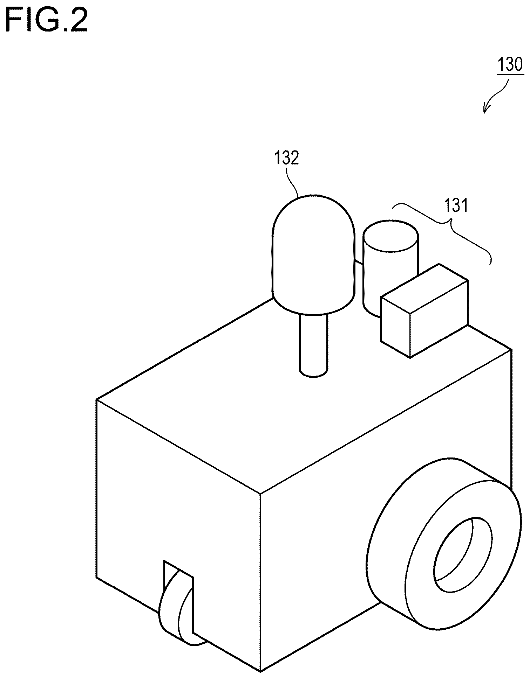

FIG. 2 is a perspective view illustrating the mobile robot 130.

As illustrated in the drawing, the mobile robot 130 has mounted thereon a sensor 131 that senses any object around the periphery, and can autonomously travel while avoiding collision on the object sensed by the sensor 131. Note that the sensor 131 in the embodiment of this invention may only be capable of sensing any object around the periphery in a non-contact manner, without special limitation regarding the detection system. For example, the sensor 131 may be implemented typically by an infrared sensor or an ultrasonic sensor.

The mobile robot 130 also has a laser scanner 132 mounted thereon, and can acquire three-dimensional point cloud data by scanning the periphery. Note that the mobile robot 130 according to the embodiment of this invention is not limited to have a wheeled design such as illustrated in FIG. 2, and may alternatively be designed to travel through the air, such as drone.

Although not illustrated in FIG. 2, the mobile robot 130 may additionally have any element other than the sensor 131 and the laser scanner 132. For example, the mobile robot 130 may typically have a position sensor that senses a position of a target structure, or a photographing position that photographs the target structure.

The communication terminal 110 has an operation accepting unit that accepts user's operation, and a display unit on which various contents of data is displayed so as to be recognizable by the user. For example, the communication terminal 110 can transmit a control command generated in response to the user's operation to the mobile robot 130, or can read and then display a data file stored in the database 122, upon being designated through the user's operation.

Note that the paragraphs below will explain the communication terminal 110 of this embodiment, on the premise of employing a touch panel that integrally implements both the operation accepting unit and the display unit, which may alternatively be implemented on separate devices (for example, the operation accepting unit may be implemented by a keyboard, and the display unit may be implemented by a liquid crystal display).

### <Prior Map>

Next, a prior map used for autonomous control of the mobile robot 130 will be explained.

The prior map herein means map data regarding a range over which the mobile robot 130 can travel, that is, regarding a building or a civil engineering structure to be managed, and is used by the mobile robot 130 in order to estimate a position of itself.

The explanation below will be given on the premise that the prior map is preliminarily stored in the database 122, and that the communication terminal 110 can display the prior map after reading it from the database 122.

The prior map may only have a file format supported by BIM software installed on the communication terminal 110, and is not limited regarding a method for creation. In this embodiment aimed at creating the prior map with closest similarity to a real space, the point cloud data acquired by scanning a building to be managed with a laser scanner is converted to BIM or CIM, and a cross section taken at a level of height of the laser scanner 132 mounted on the mobile robot 130 is used as the prior map. In a modified example, the communication terminal 110 may typically refer to CAD data created as the prior map in the design phase.

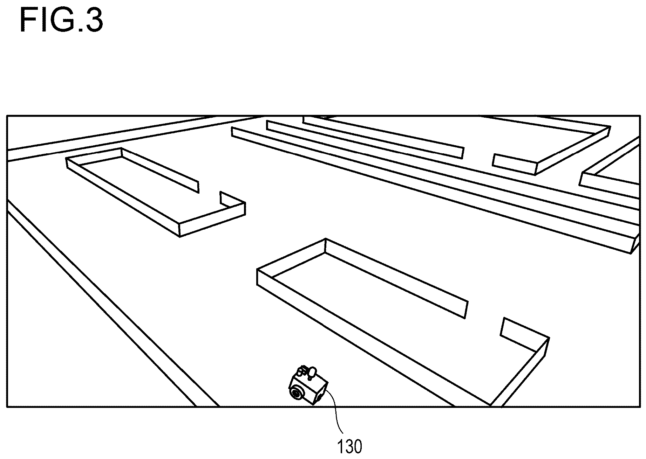

FIG. 3 is a drawing illustrating the prior map three-dimensionally displayed on a display screen of the communication terminal 110. A mode of display in FIG. 3 presents the shape of a building, within a range from a travel plane of the robot 130 up to the height of the laser scanner 132, in a three-dimensionally recognizable manner.

As illustrated in FIG. 3, the prior map displayed on the display screen of the communication terminal 110 contains a position of the mobile robot 130 at that point in time (a position of mobile robot 130 estimated by itself), so as to enable the user of the communication terminal 110 to easily recognize the position of the mobile robot 130.

### <Designation of Object to be Managed and Photographing Position>

Next, designation of an object to be managed and a photographing position will be explained.

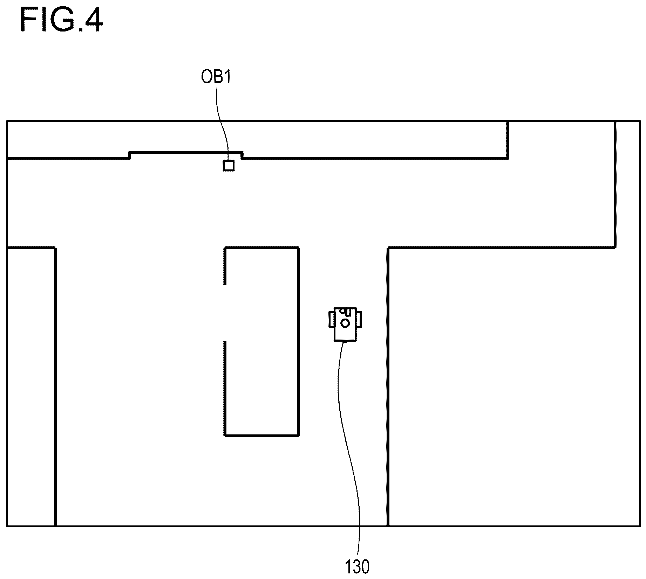

FIG. 4 is a drawing illustrating the prior map two-dimensionally displayed on the display screen of the communication terminal 110. In more detail, a mode of display in FIG. 4 is expressed as a plan view of the prior map illustrated in FIG. 3 when viewed from above the mobile robot 130.

A trial of management targeted at an object OB1 contained in the prior map illustrated in FIG. 4 will be explained below.

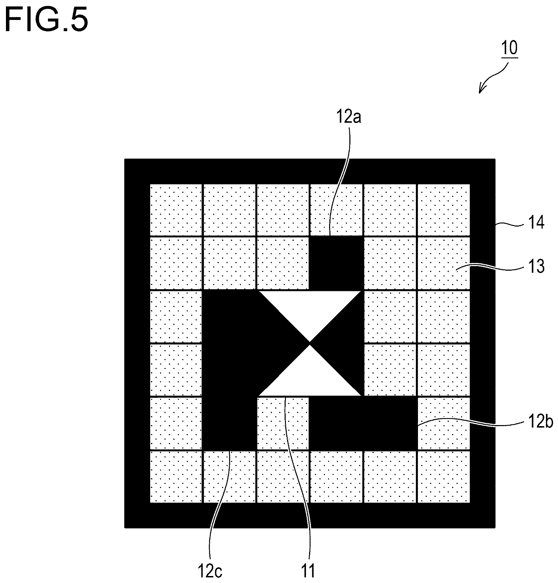

The object OB1 to be managed in carrying out the invention has attached thereto a target marker 10 illustrated in FIG. 5. FIG. 5 is a drawing illustrating the target marker 10 in this invention.

As illustrated in FIG. 5, the target marker 10 is roughly divided into several types of regions, which are denoted in this embodiment as a region 11, a region 12, a region 13 and a region 14. Note that the region 12 is a collective term for a region 12a, a region 12b, and a region 12c illustrated in FIG. 5.

The region 11 contains shape, pattern or color that indicates the center position of the target marker 10, and is given in this embodiment by a pattern having two blank triangles and two filled triangles combined therein, in which a place where apexes of four triangles overlap falls on the center position of the target marker 10. The region 11 corresponds to a "second region" according to this invention.

The region 12 has depicted therein an identification pattern assigned to the target marker 10, and in other words, contains shape, pattern or color used for distinction from any other target marker. The region 12 corresponds to a "first region" according to this invention. The "identification pattern" herein enables a computer apparatus 121 to discriminate the individual target markers, in an automatically recognizable manner (in a decodable manner with the aid of arithmetic processing) from a result measured by the laser scanner 132 (point cloud data).

The region 13 has a retroreflective material arranged therein, and surrounds the periphery of the region 11 and the region 12. The retroreflective material refers to a material that can reflect light, coming from a light source, back to a direction nearly along the path of the incident light over a wide angle of illumination. This is an opposite nature to regular reflection (specular reflection). As has been described previously, the illumination light from the laser scanner 132 and the reflected light from the retroreflective material will have an aligned phase, so that the laser scanner 132 that receives the reflected light cannot acquire the processable point cloud data in the range where the region 13 resides, thus processing the range as unmeasurable.

The region 14 is arranged in an outermost part of the target marker 10, and surrounds the region 11, the region 12 and the region 13.

The laser scanner 132, when trying to measure the retroreflective material, usually cannot measure the place where the retroreflective material resides, since the incident light on the retroreflective material and the reflected light from the retroreflective material will have an aligned phase, and such part is thus processed as an error.

This invention provides a technique that turns the aforementioned event into an advantage, wherein the computer apparatus 121 executes a process such as creating an error map that represents the unmeasurable range from the point cloud data, and determining a position where the target marker resides with reference to the thus created error map (for example, determining a location where the unmeasurable places concentrate as a position where the target marker resides).

Since an "unmeasurable" feature is less affected by an environment where the target marker is placed, so that this invention can detect the point cloud that corresponds to the target marker with high accuracy, and can therefore implement accurate surveying, as compared with a computer process with reference to the features having been focused in the prior technique (for example, shape, color, etc. of the target marker).

The target marker 10 used in this embodiment is a flat plate, and has the same identification pattern (shape, pattern or color of the region 12) depicted on both faces, thus enabling the computer apparatus 121 to decode the same identification pattern, regardless of on which face the pattern was measured with the laser scanner 132.

The region 11, the region 12 and the region 14 may only be formed of a material having a property different from the retroreflective material, and is preferably formed of a highly reflective material capable of causing regular reflection or nearly equivalent reflection. This is because the computer apparatus 121 will become easier, in its analysis process, to distinguish the region 13 from the other regions.

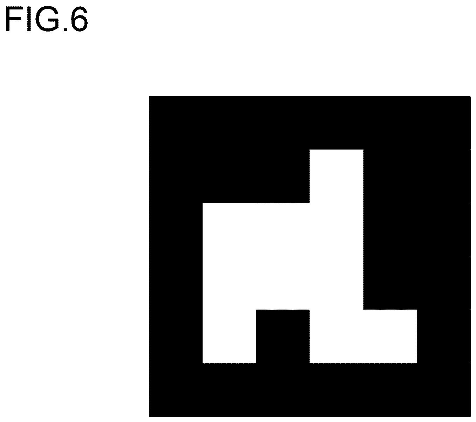

FIG. 6 is a drawing illustrating an error map created from measured result of the target marker illustrated in FIG.3.

In FIG. 6, the filled part corresponds to a place unmeasurable by the laser scanner 132 (error map), and the computer apparatus 121 determines that the place represents a range that corresponds to the region 13, and that the point cloud acquired from around the place represents a position where the target marker 10 (region 11, region 12 and region 14) resides.

Meanwhile in FIG. 6, the blank part, surrounded by the filled part, represents a range where the point cloud data corresponded to the region 11 and the region 12 resides. The computer apparatus 121 analyzes the shape, color, or the like represented by these point clouds, thereby determining the center position or the identification pattern of the target marker 10.

The computer apparatus 121 is not always necessary to determine all places, unmeasurable by the laser scanner 132, as the range that corresponds to the region 13, and is instead preferred to narrow down the range that corresponds to the region 13, with reference to other condition.

For example, the computer apparatus 121 may analyze the shape of the unmeasurable range presented by the error map, and may determine the range as a position where the target marker 10 (region 13) resides, provided that the analyzed shape matches a predetermined shape (having a square contour, in this embodiment).

Alternatively, the computer apparatus 121 may analyze the size of the unmeasurable range presented by the error map, and may determine the range as a position where the target marker 10 (region 13) resides, if the analyzed size fall within a predetermined threshold (smaller than the uppermost threshold, and larger than lowermost threshold).

The aforementioned standards may be suitably modified within the scope the object of this invention may be fulfilled, allowing adoption of any of known conditions not described in this specification.

As has been described above, since the target marker 10 has the region 13, the computer apparatus 121 can create the error map that presents the unmeasurable range with reference to the result measured by the laser scanner 132, and can determine the position where the target marker 10 resides, with reference to the thus created error map.

Also since the target marker 10 has the region 11, the computer apparatus 121 can detect the center position of the target marker 10 by a computer process, by analyzing the shape, pattern or color of the region 11.

Also since the target marker 10 has the region 12, the computer apparatus 121 can determine the identification pattern assigned to the target marker 10, by analyzing the shape, pattern or color of the region 12.

The attribute information for the object OB1 stored in the database 122 contains position and posture information of the object OB1 in the yard the mobile robot 130 patrols, as well as the identification pattern of the target marker 10 corresponded to the object OB1.

The communication terminal 110 can read the attribute information stored in the database 122 to display a list (not illustrated) of the registered objects to be managed, and can transmit, upon selection of the object OB1 through user's operation, an action plan created according to the prior map and the position information of the object OB1, and the identification pattern of the target marker 10 corresponded to the object OB1, to the mobile robot 130.

The mobile robot 130 autonomously travels in the yard, with reference to the thus received position information of the object OB1. The mobile robot 130 of this embodiment, being functionalized to autonomously avoid collision on the wall, can autonomously travel along a route directed to the designated object OB1 without colliding on the wall, even if a route possibly causing collision on the wall were transmitted as the action plan to the mobile robot 130.

The yard of the building or civil engineering structure, through which the mobile robot 130 autonomously travels, may contain object or human having not been arranged in the prior map. A uniqueness of the management assistance system 100 is that a rough route is created in the planning phase (a phase of user's operation made on the communication terminal 110), so as to allow the mobile robot 130 to autonomously make decision and travel.

The collision avoidance function of the mobile robot 130 is implemented by real-time decision of a travel route during autonomous travel, by collating the aforementioned prior map (that represents the yard of the building or civil engineering structure preliminarily prepared according to BIM or CIM), with a nearby object detected by the mounted sensor 131.

Hence, the mobile robot 130, upon detection of any object absent in the prior map, can autonomously travel along a travel route that can avoid collision on the object.

Upon arrival at the target position (near the object OB1) designated by the user's operation, while avoiding collision on the nearby object or human, the mobile robot 130 causes scanning with use of the laser scanner 132, to acquire the point cloud data that represents the shape and posture of the object OB1 that resides near the target position.

The point cloud data acquired by the mobile robot 130 is transmitted to the computer apparatus 121.

The computer apparatus 121 can analyze the point cloud data acquired during patrol by the mobile robot 130 to detect the target marker 10, and can recognize position and posture of the object OB1 having the detected target marker 10 attached thereon. The computer apparatus 121 can also acquire the identification information of the target marker 10, from the identification pattern of the detected target marker 10, and, if the object corresponded to the acquired identification information is corresponded to an existing object (object OB1) stored in the database 122, can collate the position and posture information of the structure, with the position and posture of the object OB1 actually measured.

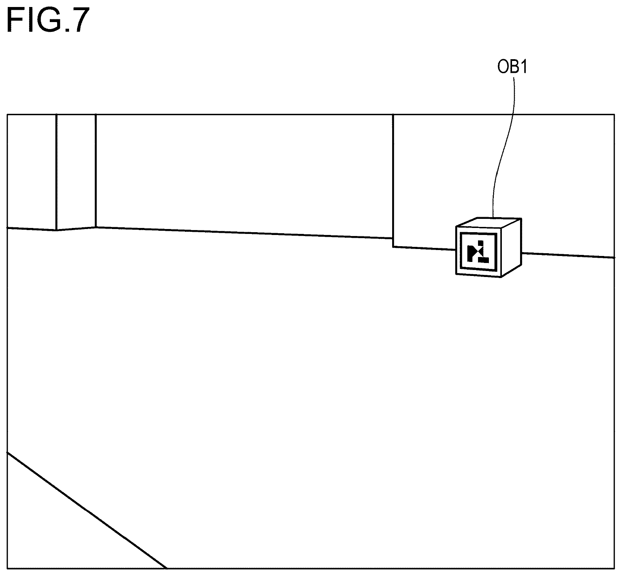

FIGs. 7 to 9 are schematic drawings illustrating the point cloud data acquired by the mobile robot 130.

FIG. 7 illustrates a case where the position and posture of the object OB1 represented by the point cloud data coincide with the position and posture of the object OB1 stored in the database 122.

In this case, the position and posture information of the object OB1 stored in the database 122 is in conformity with reality. The computer apparatus 121 will therefore not update the position and posture information of the object OB1 stored in the database 122.

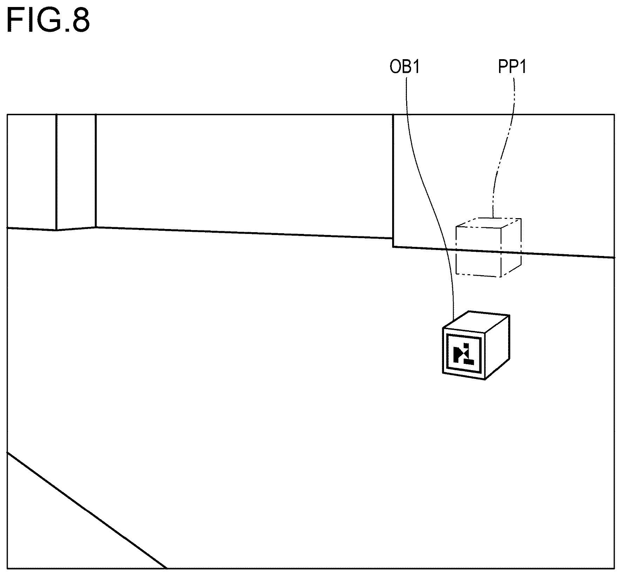

FIG. 8 illustrates a case where the position and posture of the object OB1 represented by the point cloud data do not coincide with the position and posture of the object OB1 stored in the database 122. Note that, a virtual object PP1 depicted with a two-dot chain line in FIG. 8 represents the position and posture information of the object OB1 stored in the database 122.

In this case, the position and posture information of the object OB1 stored in the database 122 is not in conformity with reality. The computer apparatus 121 will therefore update the position and posture information of the object OB1 stored in the database 122, with reference to the position and posture of the object OB1 recognized according to the point cloud data.

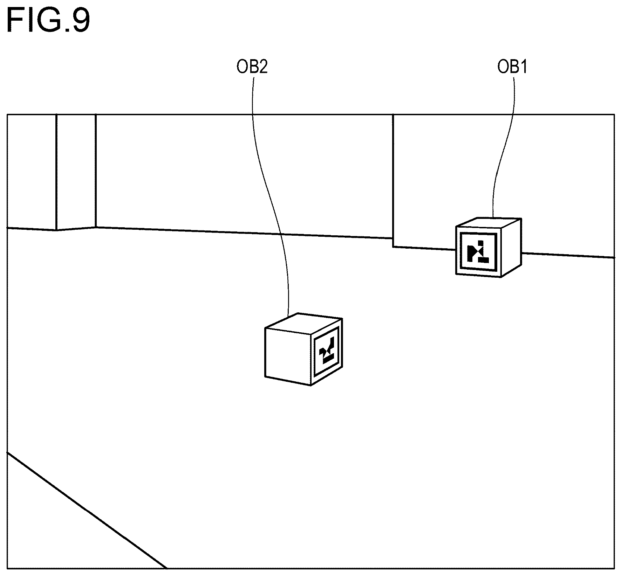

FIG. 9 illustrates a case where the point cloud data contains position and posture of an object OB2 having another target marker attached thereon, besides the object OB1 having the target marker 10 attached thereon. The object OB2 herein is defined as a structure corresponded to none of the objects stored in the database 122 (an object corresponded to a new target marker).

In this case, since the position and posture information of the object OB1 stored in the database 122 is in conformity with reality, so that the computer apparatus 121 will not update the position and posture information of the object OB1 stored in the database 122. Meanwhile, the position and posture of the object OB2 contained in the point cloud data are not stored in the database 122. The computer apparatus 121 will therefore add the new object OB2 near the object OB1, with reference to the position and posture of the object OB1 recognized according to the point cloud data.

As has been described above, according to the management assistance system 100 of this embodiment, the mobile robot 130 can autonomously travel and patrol through the yard of the building or civil engineering structure, can acquire the point cloud data making use of the plurality of target markers attached to the individual structures to be managed (object OB1 and object OB2), and can accurately recognize the position and posture of the structures to be managed according to the thus acquired point cloud data. The management assistance system 100 can therefore suitably update the attribute information for BIM or CIM stored in the database 122, with reference to the thus recognized position and posture.

The user may only operate the mobile robot 130 remotely with use of the communication terminal 110, thus successfully reducing the man-hour. The worker is also kept safe, even if the structure to be managed resides in a high risk location such as high place.

### <Modified Example>

The embodiments of this invention described above may be modified in various ways, within the scope the object of this invention may be fulfilled.

The paragraphs below will mention modified examples having not been explained so far.

The constituents contained in the system configuration illustrated in FIG. 1 may partially be omitted, or to which any unillustrated constituent may be added. In the system configuration illustrated in FIG. 1, a constituent depicted as a single component may be implemented by a plurality of components.

FIG. 1 illustrated the structure in which the computer apparatus 121 which corresponds to the "computer apparatus" in this invention and the database 122 which corresponds to the "database" in this invention are integrally contained in the management apparatus 120. The "computer apparatus" and the "database" in this embodiment are, however, not always necessarily structured as an integrated apparatus, and may be separated instead. For example, the "database" in this invention may be implemented by a structure installed on a cloud. Alternatively, the "computer apparatus" in this invention may be installed in a yard the mobile robot patrols, may be integrated with an apparatus that corresponds to the mobile robot 130 in the aforementioned embodiment, or may be integrated with an apparatus that corresponds to the communication terminal 110.

Although a specific example of the "target marker" in this invention was illustrated in FIG. 5, the target marker used in this embodiment is not limited to this mode, instead allowing use of a different mode of target marker within the scope the object of this invention is fulfilled.

The aforementioned embodiment has explained the specific examples of the point cloud data acquired by the mobile robot 130, and the process of the computer apparatus 121 adapted to the individual cases, while referring to FIGs. 7 to 9. It is, however, not always necessary in the embodiment of this invention that all processes of the computer, having been explained while referring to FIGs. 7 to 9, are executable. A part of the processes may be nonexecutable, within the scope the object of this invention is fulfilled.

This embodiment encompasses the technical spirits below.
(1) A management assistance system for a building or a civil engineering structure, the system including: a database that stores attribute information for building information modeling (BIM) enabling three-dimensional expression of a building, or construction information modeling (CIM) enabling three-dimensional expression of a civil engineering structure, by combining objects that correspond to a plurality of structures that constitute the building or the civil engineering structure; a plurality of target markers attached to specific structures which are parts of the plurality of structures, each having depicted thereon an identification pattern identifiable from each other; a mobile robot having a scanner mounted thereon, and being structured to patrol a yard of the building or the civil engineering structure, and to scan the periphery with the scanner, thereby acquiring three-dimensional point cloud data; and a computer apparatus structured to analyze the point cloud data acquired during patrol by the mobile robot to detect the target markers, and to recognize position and posture of the specific structures having the detected target markers attached thereon, the computer apparatus being able to acquire identification information of the target markers, from the identification pattern of the detected target markers, and, if the identification information of the target markers acquired by the computer apparatus is corresponded to an existing object stored in the database, the information regarding the existing object is updated with reference to the position and the posture of the specific structure recognized by the computer apparatus.
(2) The management assistance system for a building or a civil engineering structure according to (1), wherein if the identification information of the target markers acquired by the computer apparatus is not corresponded to an existing object stored in the database, a new object is added with reference to the position and the posture of the position of the specific structures recognized by the computer apparatus.
(3) The management assistance system for a building or a civil engineering structure according to (1), wherein the mobile robot: has a sensor structured to detect a nearby object; being self-propellable towards a target position where each specific structure having the target marker attached thereto resides, on a route set so as to avoid collision on the object detected by the sensor, and being structured, upon arrival at the target position after autonomous travel, to acquire the point cloud data of the specific structure that resides at the target position, by scanning with use of the scanner.
(4) The management assistance system for a building or a civil engineering structure according to any one of (1) to (3), wherein the target marker is a flat plate, and has the same identification pattern depicted on both faces of the flat plate.
(5) The management assistance system for a building or a civil engineering structure according to (4), wherein the target marker has a first region having the identification pattern depicted therein, and a second region having a pattern that indicates the center of the target marker.
(6) The management assistance system for a building or a civil engineering structure according to (5), wherein the target marker has the first region and the second region surrounded by a region having provided thereto a retroreflective material, and
   the computer apparatus is structured to detect an unmeasurable range in the point cloud data acquired during the patrol by the mobile robot to create an error map, and to detect the target marker with reference to the created error map.
(7) The management assistance system for a building or a civil engineering structure according to (6), wherein the computer apparatus is structured to determine the unmeasurable range as a place where the target marker resides, if the shape of the unmeasurable range presented by the error map matches a predetermined shape.

This application claims priority to Japanese Patent Application No. 2022-137780 filed on August 31, 2022, the entire contents of which are incorporated by reference herein.

### REFERENCE SIGNS LIST

100 management assistance system
110 communication terminal
120 management apparatus
121 computer apparatus
122 database
130 mobile robot
131 sensor
132 laser scanner

## Claims

1. A management assistance system for a building or a civil engineering structure, the system comprising:
a database that stores attribute information for building information modeling (BIM) enabling three-dimensional expression of a building, or construction information modeling (CIM) enabling three-dimensional expression of a civil engineering structure, by combining objects that correspond to a plurality of structures that constitute the building or the civil engineering structure;
a plurality of target markers attached to specific structures which are parts of the plurality of structures, each having depicted thereon an identification pattern identifiable from each other;
a mobile robot having a scanner mounted thereon, and being structured to patrol a yard of the building or the civil engineering structure, and to scan the periphery with the scanner, thereby acquiring three-dimensional point cloud data; and
a computer apparatus structured to analyze the point cloud data acquired during patrol by the mobile robot to detect the target markers, and to recognize position and posture of the specific structures having the detected target markers attached thereon,
the computer apparatus being able to acquire identification information of the target markers, from the identification pattern of the detected target markers, and
if the identification information of the target markers acquired by the computer apparatus is corresponded to an existing object stored in the database, the information regarding the existing object is updated with reference to the position and the posture of the specific structure recognized by the computer apparatus.

2. The management assistance system for a building or a civil engineering structure according to claim 1, wherein if the identification information of the target markers acquired by the computer apparatus is not corresponded to an existing object stored in the database, a new object is added with reference to the position and the posture of the position of the specific structures recognized by the computer apparatus.

3. The management assistance system for a building or a civil engineering structure according to claim 1, wherein
the mobile robot:
has a sensor structured to detect a nearby object;
being self-propellable towards a target position where each specific structure having the target marker attached thereto resides, on a route set so as to avoid collision on the object detected by the sensor, and
being structured, upon arrival at the target position after autonomous travel, to acquire the point cloud data of the specific structure that resides at the target position, by scanning with use of the scanner.

4. The management assistance system for a building or a civil engineering structure according to any one of claims 1 to 3, wherein the target marker is a flat plate, and has the same identification pattern depicted on both faces of the flat plate.

5. The management assistance system for a building or a civil engineering structure according to claim 4, wherein the target marker has a first region having the identification pattern depicted therein, and a second region having a pattern that indicates the center of the target marker.

6. The management assistance system for a building or a civil engineering structure according to claim 5, wherein the target marker has the first region and the second region surrounded by a region having provided thereto a retroreflective material, and
the computer apparatus is structured to detect an unmeasurable range in the point cloud data acquired during the patrol by the mobile robot to create an error map, and to detect the target marker with reference to the created error map.

7. The management assistance system for a building or a civil engineering structure according to claim 6, wherein the computer apparatus is structured to determine the unmeasurable range as a place where the target marker resides, if the shape of the unmeasurable range presented by the error map matches a predetermined shape.
